# EUROPÄISCHE PATENTSCHRIFT

(11) **EP 0 584 528 B1**
(45) Veröffentlichungstag und Bekanntmachung des Hinweises auf die Patenterteilung: **08.11.1995**
(21) Anmeldenummer: 93111619.8
(22) Anmeldetag: 21.07.1993
(51) Int. Cl.: H01M 2/12, H01M 2/04

(54) **Deckel für Bleiakkumulator mit Entgasungssystem**
Lid assembly for lead/accumulator with venting system
Couvercle pour accumulateur au plomb comportant un système de purge des gaz

(30) Priorität: 24.07.1992 DE 9209986 U
(43) Veröffentlichungstag der Anmeldung: 02.03.1994
(73) Patentinhaber: Accumulatorenwerke Hoppecke Carl Zoellner & Sohn GmbH & Co. KG, D-59914 Brilon (DE)
(72) Erfinder: Hampe, Werner, D-3538 Marsberg 12 (DE); Scholz, Peter, D-5790 Brilon 2 (DE)
(74) Vertreter: Stenger, Watzke & Ring Patentanwälte

(56) Entgegenhaltungen:
- EP-A- 0 178 422
- DE-U- 8 007 719
- DE-U- 9 209 986
- FR-A- 1 093 637
- GB-A- 1 525
- GB-A- Q1 525
- GB-A- 1 262 239
- US-A- 2 221 542
- US-A- 4 851 305
- US-A- 4 916 034

## Beschreibung

Die Erfindung betrifft einen Bleiakkumulator mit einem mehrere Zellen aufweisenden Gehäuse sowie mit einem das Gehäuse abschließenden Deckel, in dem zwischen einem Unterdeckel und einem dazu im Abstand angeordneten Oberdeckel ein Hohlraum zur Säureabscheidung ausgebildet ist, wobei der Unterdeckel eine Bodenöffnung und der Oberdeckel eine mit einem Verschlußstopfen verschließbare, zu der Bodenöffnung koaxiale Füll- und Kontrollöffnung mit einem nach unten in den Hohlraum gerichteten Rohrstutzenteil aufweist, wobei das untere Ende des Rohrstutzenteils unter Belassung eines freien Ringspaltes oberhalb des Unterdeckels endet.

Ein Bleiakkumulator dieser Art ist aus dem DE-GM 84 30 246 bekannt. Er weist ein Gehäuse auf, in dem mehrere Zellen ausgebildet sind. Oberseitig ist das Gehäuse mit einem Deckel abgeschlossen, der als sogenannter Blockdeckel ausgebildet ist. Dabei ist zwischen einem Unterdeckel und einem dazu im Abstand angeordneten Oberdeckel ein Hohlraum zur Säureabscheidung ausgebildet. Dieser Blockdeckel wird zunächst aus thermoplastischem Kunststoff hergestellt, indem die beiden Deckelteile beispielsweise miteinander verschweißt oder verklebt werden, und anschließend auf dem Gehäuse befestigt, welches ebenfalls aus thermoplastischem Kunststoff besteht. Der Unterdeckel weist eine Bodenöffnung auf, die trichterförmig für die Säureabführung ausgebildet ist und von der aus sich ein angeformter Stutzen senkrecht nach unten in die Zelle erstreckt. Dazu korrespondierend weist der Oberdeckel eine koaxiale Füll- und Kontrollöffnung auf, welche mit einem Verschlußstopfen verschließbar ist. Diese Füll- und Kontrollöffnung weist ein nach unten in den Hohlraum gerichtetes, am Oberdeckel einstückig angeformtes Rohrstutzenteil auf, dessen Durchmesser für die Füll- und Kontrollöffnung größer ist als der Durchmesser der im Unterteil ausgebildeten Bodenöffnung. Das untere Ende des Rohrstutzenteils ragt dabei derart nach unten, daß es oberhalb des Unterdeckels endet und dabei einen freien Ringspalt freiläßt. Die besonderen Durchmesserverhältnisse der Füll- und Kontrollöffnung sowie der Bodenöffnung ermöglichen eine Dichtigkeitsprüfung sowohl des Blockdeckels als auch eine Dichtigkeitsprüfung nach befestigtem Blockdeckel auf dem Gehäuse zwischen den einzelnen Zellen.

Nachteilig bei diesem bekannten Bleiakkumulator ist, daß der oberhalb des Unterdeckels endende Ringspalt relativ groß dimensioniert ist. Eine Forderung aus der Automobilindustrie ist jedoch, daß derartige Starterbatterien mittels Robotern in das Kraftfahrzeug eingebaut werden können. Dabei ist es allerdings erforderlich, daß die Batterie gekippt wird. Aufgrund des großen Ringspaltes läuft aber beim Kippen die Säure in den Deckel, was natürlich nicht erwünscht ist.

Davon ausgehend liegt der Erfindung die **Aufgabe** zugrunde, den bekannten Bleiakkumulator derart weiterzuentwickeln, daß er auch ohne weiteres beispielsweise für eine Robotermontage gekippt werden kann.

Als technische **Lösung** wird mit der Erfindung vorgeschlagen, daß der Ringspalt gegenüber der Bodenöffnung teilweise oder vollständig abgedichtet ist, daß zwischen der Zelle und dem im Deckel ausgebildeten Hohlraum wenigstens eine Öffnung vorgesehen ist und daß das Rohrstutzenteil und/oder der Verschlußstopfen am unteren Umfangsrand mit einer umlaufenden Dichtlippe versehen ist, die dichtend an dem Unterdeckel anliegt.

Ein nach dieser technischen Lehre ausgebildeter Bleiakkumulator hat den Vorteil, daß er ohne weiteres beispielsweise für eine Robotermontage gekippt werden kann, ohne daß in großem Maße Säure aus der Zelle in den im Deckel ausgebildeten Hohlraum läuft. Es sind zwar Öffnungen zwischen der Zelle und dem Hohlraum im Deckel vorgesehen bzw. vorzusehen, doch können diese Öffnungen derart klein dimensioniert werden, daß sie eine Entgasung der jeweiligen Zelle ermöglichen sowie einen Rücklauf des kondensierten Säurenebels gestatten. In Abhängigkeit von diesen Erfordernissen ist die Größe der Öffnungen zu wählen. Trotz dieser Öffnungen bildet die Abdichtung eine teilweise Absperrung, die im Sinne eines Säurerückhalteeffektes verhindert, daß die Säure sofort in den Deckel hineinschießt, wenn der Akkumulator gekippt wird. Die vorhandenen Durchflußmöglichkeiten für die Säure aus der Zelle in den Deckel werden durch eine umlaufende Dichtlippe definiert verringert. Trotz dieser Maßnahmen besteht jedoch für den Bleiakkumulator nach wie vor die Möglichkeit, die Dichtigkeit der einzelnen Zellen gegeneinander zu prüfen.

Vorzugsweise ist dabei die Dichtlippe einstückig am Rohrstutzenteil bzw. am Verschlußstopfen angeformt, so daß die Ausbildung der Dichtung ohne zusätzlichen Aufwand bei der Herstellung des Bleiakkumulators in einem Spritzgußvorgang erfolgen kann. Die Dichtlippe besteht somit ebenso wie das Gehäuse sowie der Deckel aus thermoplastischem Kunststoff.

Eine Weiterbildung der Dichtlippe schlägt vor, daß diese an wenigstens einer Stelle unter Bildung der Öffnung durch einen Schlitz, Nut oder Einkerbung durchbrochen ist. Dies stellt eine technisch einfache Möglichkeit zur Ausbildung der Öffnungen dar. Beispielsweise können mehrere derartige Öffnungen um den Umfang der Dichtlippe herum verteilt sein, beispielsweise insgesamt vier Öffnungen.

Dabei erstreckt sich die Öffnung vorzugsweise in radialer Richtung und verjüngt sich dabei trichterförmig. Durch diese trichterförmige Ausbildung der Öffnung(en) bilden sich in ihnen eine Art Staudruck für die Säure mit einem optimalen Säurerückhalteeffekt.

Eine weitere Weiterbildung schlägt vor, daß die am Verschlußstopfen ausgebildete Dichtlippe im wesentlichen zylindrisch oder konisch sich verjüngend ausgebildet und im Paßsitz in die Bodenöffnung eingesetzt ist. Die Dichtlippe bildet somit eine Art Verlängerung des Verschlußstopfens, welche die Dichtung durch eine entsprechende Anlage am Unterteil des Deckels herbeiführt.

Eine Weiterbildung hiervon schlägt vor, daß der Zylinder oder die konische Verjüngung zur Bildung der Öffnung(en) Nuten aufweist. Auch dies stellt eine technisch einfache Möglichkeit zur Realisierung der Öffnungen dar. Beispielsweise können diametral einander gegenüberliegend zwei Nuten in der Verschlußstopfenverlängerung ausgebildet sein.

Eine weitere Weiterbildung des erfindungsgemäßen Bleiakkumulators schlägt vor, daß die Öffnung(en) im Boden des Unterdeckels unter Bildung einer Verbindung zwischen der Zelle und dem Hohlraum im Deckel ausgebildet ist (sind). Diese im Boden des Unterdeckels ausgebildeten Öffnungen dienen somit der Entgasung für den Säurenebel sowie für den Rücklauf der kondensierten Säure. Allerdings sind die Öffnungen derart klein dimensioniert, daß bei einem Kippen des Bleiakkumulators sich nur wenig Säure in den im Deckel ausgebildeten Ringkanal ergießt, welcher das Rohrstutzenteil des Oberdeckels konzentrisch umgibt.

Weiterhin wird vorgeschlagen, daß im Deckel Durchbrechungen zur Verbindung benachbarter Hohlräume einander benachbarter Zellen ausgebildet sind. Diese Durchbrechungen ermöglichen eine Entgasung zwischen den Zellen und gehen vom Ringkanal im Deckel aus.

Bei einer erfindungsgemäßen Weiterbildung ist die Bodenöffnung von einem sich in die Zelle erstreckenden Stutzen umgeben, so daß das Hochspritzen von Säure in den Bereich der Bodenöffnung unterbunden wird.

Schließlich wird in einer Weiterbildung vorgeschlagen, daß der Oberdeckel einen bezüglich der Bodenöffnung größeren Durchmesser aufweist, so daß eine Dichtigkeitsprüfung des Blockdeckels sowie des befestigten Blockdeckels auf dem Gehäuse möglich ist.

Verschiedene Ausführungsformen eines erfindungsgemäßen Bleiakkumulators werden nachfolgend anhand der Zeichnungen dargestellt. In diesen zeigt:
- Fig. 1: einen Schnitt durch einen Teilausschnitt im Bereich der Füll- und Kontrollöffnung einer ersten Ausführungsform eines Bleiakkumulators;
- Fig. 2: einen Schnitt entlang der Linie II-II in Fig. 1, jedoch unter Weglassung des Verschlußstopfens;
- Fig. 3: einen Schnitt entsprechend dem in Fig. 1 einer zweiten Ausführungsform,
- Fig. 4: eine Draufsicht auf den Unterdeckel unter Weglassung des Oberdeckels des Bleiakkumulators in Fig. 3;
- Fig. 5: eine Einzeldarstellung des Verschlußstopfens der zweiten Ausführungsform in einer Schnittdarstellung;
- Fig. 6: eine Unteransicht des Verschlußstopfens in Fig. 5;
- Fig. 7: einen Schnitt entsprechend dem in Fig. 1 einer dritten Ausführungsform;
- Fig. 8: einen Schnitt entsprechend dem in Fig. 1 einer vierten Ausführungsform;
- Fig. 9: einen Schnitt entsprechend dem in Fig. 1 einer fünften Ausführungsform und
- Fig. 10: einen Schnitt entsprechend dem in Fig. 1 einer sechsten Ausführungsform.

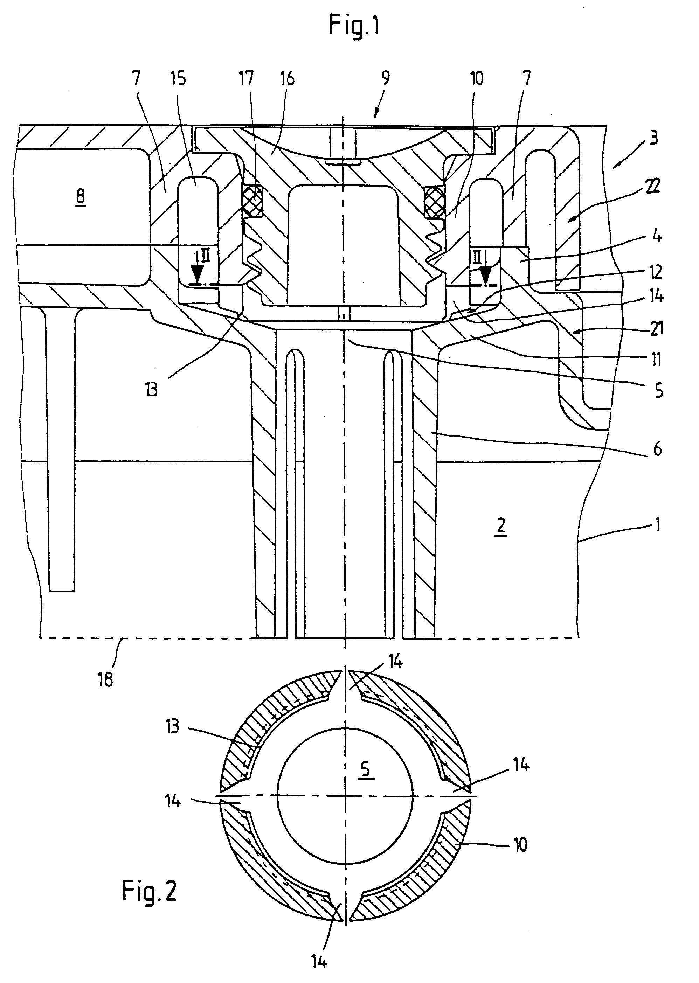

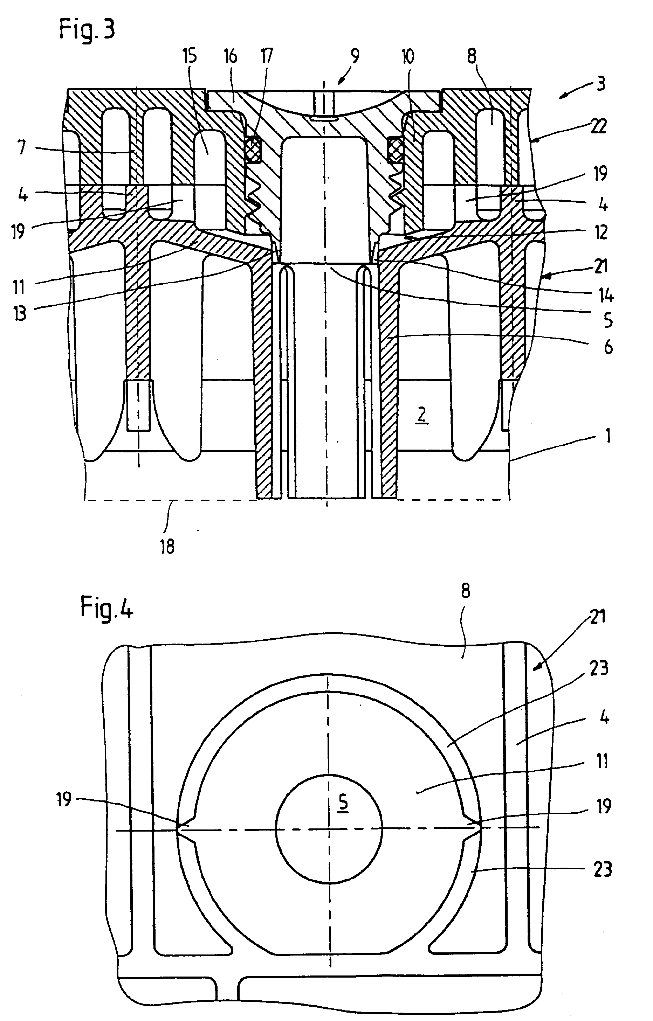

Die erste Ausführungsform eines Bleiakkumulators, wie sie in den Fig. 1 und 2 dargestellt ist, weist zunächst ein Gehäuse 1 aus thermoplastischem Kunststoff auf, in dem mehrere Zellen 2 angeordnet sind. Das oben offene Gehäuse 1 ist durch einen Deckel 3 ebenfalls aus thermoplastischem Kunststoff abgeschlossen. Dieser Deckel 3 setzt sich dabei zusammen aus einem Unterdeckel 21 sowie einem damit korrespondierenden Oberdeckel 22. In Fig. 1 ist lediglich der Bereich über einer der Zellen 2 angedeutet. Der kappenartige Oberdeckel 22 ist mit dem Unterdeckel 21 verschweißt, der wiederum mit dem Gehäuse 1 ebenfalls dicht verschweißt ist.

Der Unterdeckel 21 ist im wesentlichen flach mit Rücklaufschrägen ausgebildet und weist oberseitig diverse, nach oben gerichtete Stege 4 auf. Im Bereich der Zellen weist der Unterdeckel 21 weiterhin jeweils eine Bodenöffnung 5 zum Entgasen der Zellen 2 sowie als Rücklauf für kondensierte Säure auf. Zu diesem Zweck ist der Unterdeckel 21 im Bereich dieser Bodenöffnung 5 trichterförmig ausgebildet und es ist jeweils ein nach unten gerichteter Stutzen 6 angeformt, der auch zur Sichtprüfung des maximalen Säurestandes 18 dient. Der Stutzen 6 kann dabei auch durch Weglassen auf die alleinige Bodenöffnung 5 im Unterdeckel 21 reduziert sein.

Der Oberdeckel 22 ist korrespondierend zum Unterdeckel 21 ausgebildet und weist dabei nach unten gerichtete Stege 7 auf, welche mit den Stegen 4 des Unterdeckels 21 fest verbunden, insbesondere verschweißt oder verklebt sind. Diese Stege 4,7 definieren im Hohlraum 8 des Deckels 3 ein Labyrinth für die Säureabscheidung.

Der Oberdeckel 22 weist weiterhin eine Füll- und Kontrollöffnung 9 auf, welche durch ein am Oberdeckel 22 angeformtes Rohrstutzenteil 10 mit Gewinde definiert ist, welches Teil 10 sich konzentrisch zur Bodenöffnung 5 nach unten hin erstreckt. Der Innendurchmesser der Füll- und Kontrollöffnung 9 ist dabei größer als der Durchmesser der Bodenöffnung 5. Außerdem endet das Rohrstutzenteil 10 mit etwas Abstand oberhalb des Bodens 11 des Unterdeckels 21 und definiert dabei einen Ringspalt 12. Allerdings ist an der unteren Umfangskante des Rohrstutzenteils 10 eine umlaufende Dichtlippe 13 angeformt (Fig. 1) , welche auf dem Boden 11 des Unterdeckels 21 dichtend aufliegt. Die Schnittdarstellung gemäß Fig. 2 läßt aber erkennen, daß diese umlaufende Dichtlippe 13 um den Umfang verteilt insgesamt vier trichterförmige Öffnungen 14 aufweist, die eine Verbindung zwischen der Zelle 2 und den das Rohrstutzenteil 10 umgebenden Ringraum 15 definieren.

Die Füll- und Kontrollöffnung 9 ist mit einem Verschlußstopfen 16 verschlossen. Zu diesem Zweck ist das Rohrstutzenteil 10 mit einem Innengewinde versehen, auf welches der Verschlußstopfen 16 aufgeschraubt werden kann. Zusätzlich ist zwischen dem Verschlußstopfen 16 und dem Rohrstutzenteil 10 ein O-Ring 17 vorgesehen.

Die schlitzartigen Öffnungen 14 ermöglichen eine Entgasung der Zelle 2, damit sich der Säurenebel im Hohlraum 8 des Deckels 3 abscheiden kann, die Öffnungen 14 sind jedoch klein genug, um bei einem Kippen des Bleiakkumulators zu verhindern, daß die Säure in den Deckel 3 und dabei zunächst in den Ringraum 15 fließt. In Fig. 1 ist gestrichelt der maximale Säurestand 18 angedeutet. Schließlich ermöglichen die Öffnungen 14 einen Rücklauf der Säure zurück in die Zelle 2. Zu guter Letzt besteht die Möglichkeit einer Dichtigkeitsprüfung zwischen den einzelnen Zellen 2, wie sie in dem DE-GM 84 30 246 beschrieben ist.

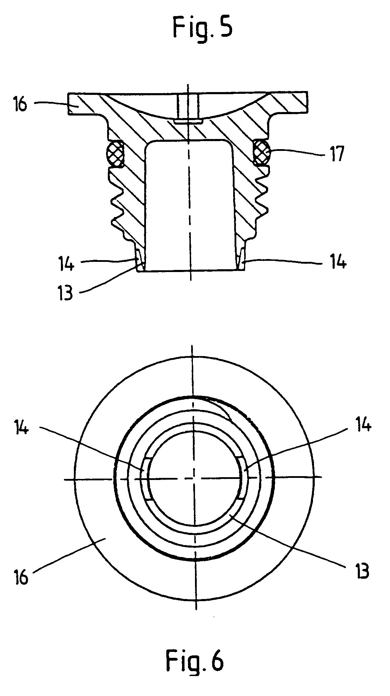

In den Fig. 3 bis 6 ist eine zweite Ausführungsform dargestellt. Diese unterscheidet sich von der ersten Ausführungsform dadurch, daß der Ringspalt 12 auf etwas andere Weise abgedichtet ist. Statt der einstückigen Ausbildung der Dichtlippe 13 am Rohrstutzenteil 10 ist bei dieser zweiten Ausführungsform die Dichtlippe 13 am unteren Umfangsrand des Verschlußstopfens 16 angeformt, und zwar derart, daß die Dichtlippe 13 eine Art angeformten Zylinder definiert, dessen Außendurchmesser im wesentlichen dem Innendurchmesser der Bodenöffnung 5 entspricht, so daß der Verschlußstopfen 16 im Paßsitz auf die Bodenöffnung 5 des Unterdeckels 21 dichtend aufsetzbar ist. Die Öffnungen 14 sind dabei als nutenförmige am Außenumfang ausgebildete Ausnehmungen in der Dichtlippe 13 ausgebildet, wie sie insbesondere in Fig. 5 und 6 erkennbar sind. Die Öffnungen 14 ermöglichen somit auch hier eine Entgasung der Zelle 2 und dienen darüber hinaus der Säurerückhaltung bei Kippen der Batterie.

Schließlich ist in den Fig. 3 und 4 erkennbar, daß das Rohrstutzenteil 10 im Oberdeckel 22 von einem Ringsteg 23 mit Abstand umgeben ist, der Durchbrechungen 19 aufweist, die der Entgasung der Zelle 2 dienen und die so ausgeführt sind, daß ein hoher Säurerückhalt möglich ist.

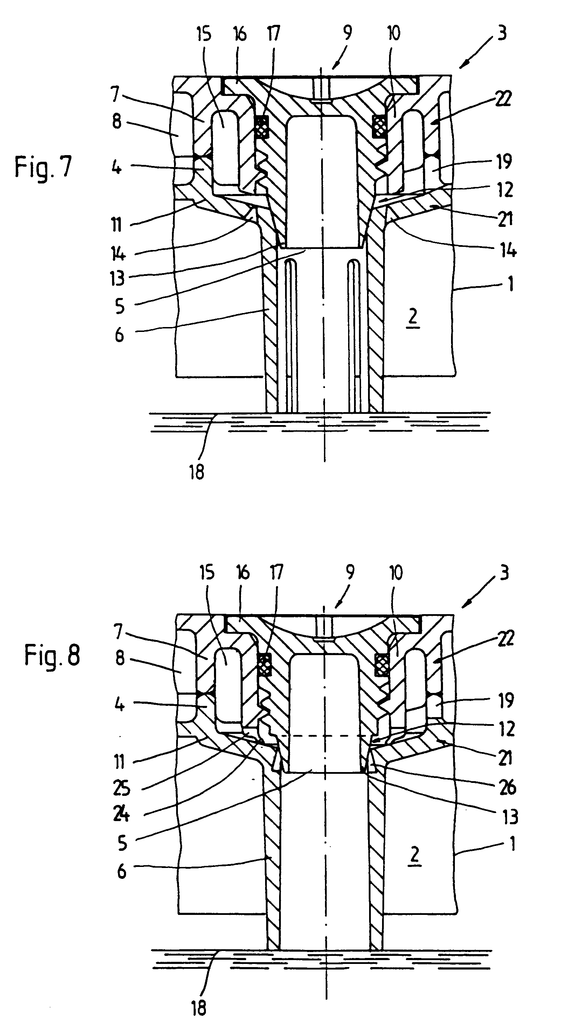

Die dritte Ausführungsform in Fig. 7 weist ebenfalls eine Dichtlippe 13 auf, welche am Verschlußstopfen 16 angeformt ist. Dabei ist die Dichtlippe 13 des Verschlußstopfens 16 nach unten hin konisch sich verjüngend ausgebildet und korrespondiert mit einer entsprechenden konischen Ausbildung der Wandung der Bodenöffnung 5. Im übrigen ist aber der Ringspalt 12 durch diese Dichtlippe 13 um den ganzen Umfang herum vollständig abgedichtet. Für die Entgasung der Zelle 2 dienen Öffnungen 14, welche im Boden 11 des Unterdeckels 21 benachbart zur Bodenöffnung 5 ausgebildet sind. Von der Zelle 2 aus verjüngen sich diese Öffnungen 14 konisch zum Ringspalt 12 hin. Die so ausgebildeten Öffnungen 14 dienen der Entgasung mit einem Säurerückhalteeffekt. Außerdem wird ein Rücklauf von kondensierter Säure ermöglicht. Weiterhin ist eine Durchbrechung 19 für die Entgasung zwischen den Zellen 2 zu erkennen.

Die vierte Ausführungsform in Fig. 8 weist eine angeformte Dichtlippe 24 am unteren Umfangsrand des Rohrstutzenteils 10 auf, wie sie bereits im Zusammenhang mit der ersten Ausführungsform beschrieben worden ist. So weist auch hier die Dichtlippe 24 schlitzartige Öffnungen 25 für die Entgasung zwischen der Zelle 2 und dem Ringraum 15 auf. Weiterhin weist der Verschlußstopfen 16 ebenfalls eine Art Dichtlippe 13 auf, welche die eigentliche Bodenöffnung 5 teilweise abdichtet. Hierzu ist die Bodenöffnung 5 mit Öffnungen 26 ausgestattet ist. Schließlich weist auch diese Ausführungsform Durchbrechungen 19 zur Entgasung zwischen den Zellen 2 auf.

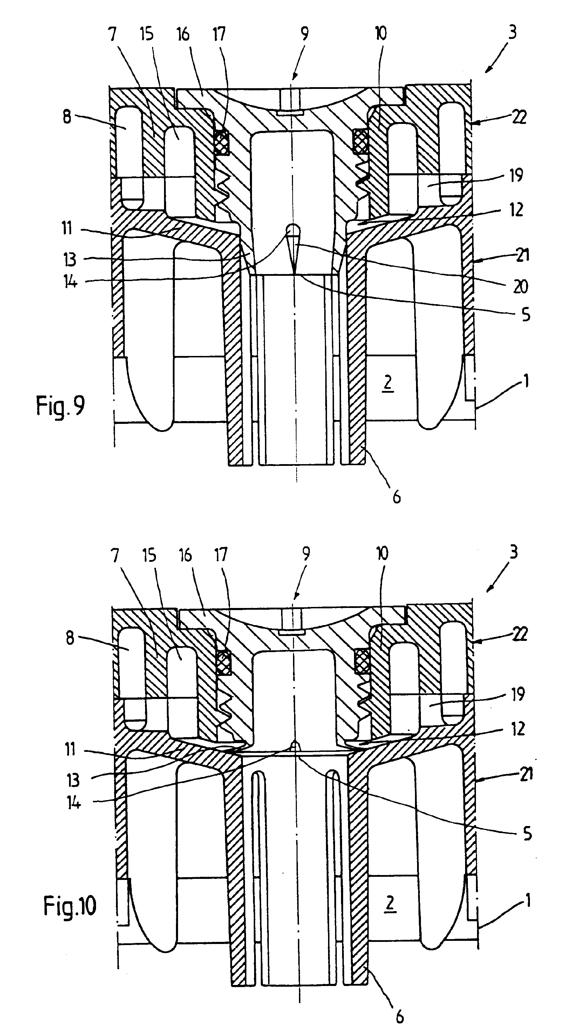

Die fünfte Ausführungsform in Fig. 9 weist, ähnlich wie bei der Ausführungsform in Fig. 7, eine nach unten hin konisch sich verjüngende Dichtlippe 13 auf, welche am Verschlußstopfen 16 angeformt ist. Die Dichtlippe 13 ist allerdings mit Schlitzen 20 versehen, die bis oberhalb des Bodens 11 reichen und daher jeweils die zur Entgasung der Zelle 2 dienende Öffnung 14 freilassen.

Die sechste Ausführungsform in Fig. 10 schließlich verwendet horizontal auslaufende Dichtlippen 13, die sich ringförmig auf der Oberfläche des Bodens 11 abstützen. Auch diese Dichtlippen 13 sind mit Schlitzen versehen, die bei aufliegenden Dichtlippen 13 Öffnungen 14 zur Entgasung freilassen.

## Patentansprüche

1. Bleiakkumulator mit einem mehrere Zellen (2) aufnehmenden Gehäuse (1) sowie mit einem das Gehäuse (1) abschließenden Deckel (3), in dem zwischen einem Unterdeckel (21) und einem dazu im Abstand angeordneten Oberdeckel (22) ein Hohlraum (8) zur Säureabscheidung ausgebildet ist, wobei der Unterdeckel (21) eine Bodenöffnung (5) und der Oberdeckel (22) eine mit einem Verschlußstopfen (16) verschließbare, zu der Bodenöffnung (5) koaxiale Füll- und Kontrollöffnung (9) mit einem nach unten in den Hohlraum (8) gerichteten Rohrstutzenteil (10) aufweist, dessen unteres Ende unter Belassung eines freien Ringspaltes (12) oberhalb des Unterdeckels (21) endet,
**dadurch gekennzeichnet**,
daß der Ringspalt (12) gegenüber der Bodenöffnung (5) teilweise oder vollständig abgedichtet ist, daß zwischen der Zelle (2) und dem im Deckel (3) ausgebildeten Hohlraum (8) wenigstens eine Öffnung (14) vorgesehen ist und daß das Rohrstutzenteil (10) und/oder der Verschlußstopfen (16) am unteren Umfangsrand mit einer umlaufenden Dichtlippe (13) versehen ist, die dichtend an dem Unterdeckel (21) anliegt.

2. Bleiakkumulator nach Anspruch 1, dadurch gekennzeichnet, daß die Dichtlippe (13) einstückig am Rohrstutzenteil (10) bzw. am Verschlußstopfen (16) angeformt ist.

3. Bleiakkumulator nach Anspruch 1 oder 2, dadurch gekennzeichnet, daß die Dichtlippe (13) an wenigstens einer Stelle unter Bildung der Öffnung (14) durch einen Schlitz, Nut oder Einkerbung durchbrochen ist.

4. Bleiakkumulator nach Anspruch 3, dadurch gekennzeichnet, daß sich die Öffnung (14) in radialer Richtung erstreckt und sich dabei trichterförmig verjüngt.

5. Bleiakkumulator nach einem der Ansprüche 1 bis 4, dadurch gekennzeichnet, daß die am Verschlußstopfen (16) ausgebildete Dichtlippe (13) im wesentlichen zylindrisch oder konisch sich verjüngend ausgebildet und im Paßsitz in die Bodenöffnung (5) eingesetzt ist.

6. Bleiakkumulator nach Anspruch 5, dadurch gekennzeichnet, daß der Zylinder oder die konische Verjüngung zur Bildung der Öffnung(en) (14) eine oder mehrere Nuten aufweist.

7. Bleiakkumulator nach einem der Ansprüche 1, 4 und 5, dadurch gekennzeichnet, daß die Öffnung(en) (14) im Boden (11) des Unterdeckels (21) unter Bildung einer Verbindung zwischen der Zelle (2) und dem Hohlraum (8) im Deckel (3) ausgebildet ist (sind).

8. Bleiakkumulator nach einem der Ansprüche 1 bis 7, dadurch gekennzeichnet, daß im Deckel (3) Durchbrechungen (19) zur Verbindung zum Hohlraum (8) vorhanden sind.

9. Bleiakkumulator nach einem der Ansprüche 1 bis 8, dadurch gekennzeichnet, daß die Bodenöffnung (5) von einem sich in die Zelle (2) erstreckenden Stutzen (6) umgeben ist.

10. Bleiakkumulator nach einem der Ansprüche 1 bis 9, dadurch gekennzeichnet, daß die Füll- und Kontrollöffnung (9) im Oberdeckel (22) einen bezüglich der Bodenöffnung (5) größeren Durchmesser aufweist.

## Claims

1. Lead accumulator with a housing (1) comprising several cells (2) as well as with a cover (3) which closes the housing (1) and in which a cavity (8) for acid precipitation is formed between a lower cover (21) and an upper cover (22) arranged at a distanced therefrom, wherein the lower cover (21) comprises a bottom opening (5) and the upper cover (22) comprises a filling and inspection opening (9) which is sealable with a sealing plug (16) and coaxial with the bottom opening (5), with a pipe socket portion (10) which is oriented downwardly into the cavity (8) and of which the lower end ends above the lower cover (21), leaving a free annular gap (12), characterised in that the annular gap (12) is partly or completely sealed off from the bottom opening (5), in that between the cell (2) and the cavity (8) formed in the cover (3) is provided at least one opening (14) and in that the pipe socket portion (10) and/or the sealing plug (16) is provided at the lower circumferential edge with a peripheral sealing lip (13) which abuts sealingly against the lower cover (21).

2. Lead accumulator according to claim 1, characterised in that the sealing lip (13) is formed integrally with the pipe socket portion (10) or the sealing plug (16).

3. Lead accumulator according to claim 1 or 2, characterised in that the sealing lip (13) is breached at at least one point by a slot, groove or notch, forming the opening (14).

4. Lead accumulator according to claim 3, characterised in that the opening (14) extends in a radial direction and in the process tapers in a funnel shape.

5. Lead accumulator according to any of claims 1 to 4, characterised in that the sealing lip (13) formed on the sealing plug (16) is essentially cylindrical or conically tapering and inserted in a snug fit in the bottom opening (5).

6. Lead accumulator according to claim 5, characterised in that the cylinder or conical taper comprises one or more grooves for forming the opening(s) (14).

7. Lead accumulator according to any of claims 1, 4 and 5, characterised in that the opening(s) (14) is (are) formed in the bottom (11) of the lower cover (21), forming a connection between the cell (2) and the cavity (8) in the cover (3).

8. Lead accumulator according to any of claims 1 to 7, characterised in that there are apertures (19) in the cover (3) for connection to the cavity (8).

9. Lead accumulator according to any of claims 1 to 8, characterised in that the bottom opening (5) is surrounded by a socket (6) extending into the cell (2).

10. Lead accumulator according to any of claims 1 to 9, characterised in that the filling and inspection opening (9) in the upper cover has a larger diameter than the bottom opening (5).

## Revendications

1. Accumulateur au plomb comportant un carter (1) à plusieurs cellules (2), ainsi qu'un couvercle (3) fermant le carter (1) et dans lequel, entre un couvercle inférieur (21) et un couvercle supérieur (22) disposé à distance du précédent, est réalisée une cavité (8) destinée à la précipitation d'acide, le couvercle inférieur (21) comportant une ouverture de fond (5) et le couvercle supérieur (22) une ouverture de remplissage et de contrôle (9), qui est coaxiale à l'ouverture de fond (5) et peut être fermée au moyen d'un bouchon d'obturation (16), et qui présente une partie d'embout tubulaire (10) dirigée vers le bas, à l'intérieur de la cavité (8), l'extrémité inférieure de la partie d'embout tubulaire se terminant au-dessus du couvercle inférieur (21) en laissant libre un interstice annulaire (12),
caractérisé en ce que l'interstice annulaire (12) est rendu partiellement ou totalement étanche par rapport à l'ouverture de fond (5), en ce qu'entre la cellule (2) et la cavité (8) formée dans le couvercle (3), est prévue au moins une ouverture (14), et en ce que la partie d'embout tubulaire (10) et/ou le bouchon d'obturation (16) est ou sont pourvus sur le bord périphérique inférieur, d'une lèvre d'étanchéité (13) périphérique, qui s'applique de manière étanche contre le couvercle inférieur (21).

2. Accumulateur au plomb selon la revendication 1, caractérisé en ce que la lèvre d'étanchéité (13) est formée d'un seul tenant, par moulage, sur la partie d'embout tubulaire (10) ou sur le bouchon d'obturation (16).

3. Accumulateur au plomb selon la revendication 1 ou 2, caractérisé en ce que la lèvre d'étanchéité (13) est percée, en au moins un endroit, par une fente, une rainure ou une encoche, en formant ainsi l'ouverture (14).

4. Accumulateur au plomb selon la revendication 3, caractérisé en ce que l'ouverture (14) s'étend dans la direction radiale, et se rétrécit à cette occasion en forme d'entonnoir.

5. Accumulateur au plomb selon l'une des revendications 1 à 4, caractérisé en ce que la lèvre d'étanchéité (13) formée sur le bouchon d'obturation (16) présente une configuration sensiblement cylindrique ou se rétrécissant de manière conique, et est insérée selon un ajustement fin, dans l'ouverture de fond (5).

6. Accumulateur au plomb selon la revendication 5, caractérisé en ce que le cylindre ou le rétrécissement conique présente une ou plusieurs rainures pour former l'ouverture ou les ouvertures (14).

7. Accumulateur au plomb selon l'une des revendications 1, 4 et 5, caractérisé en ce que l'ouverture ou les ouvertures (14) est ou sont réalisée(s) dans le fond (11) du couvercle inférieur (21), en formant une liaison entre la cellule (2) et la cavité (8) dans le couvercle (3).

8. Accumulateur au plomb selon l'une des revendications 1 à 7, caractérisé en ce que dans le couvercle (3) sont réalisés des passages (19) pour établir la liaison à la cavité (8).

9. Accumulateur au plomb selon l'une des revendications 1 à 8, caractérisé en ce que l'ouverture de fond (5) est entourée par un embout tubulaire (6) s'étendant dans la cellule (2).

10. Accumulateur au plomb selon l'une des revendications 1 à 9, caractérisé en ce que l'ouverture de remplissage et de contrôle (9) dans le couvercle supérieur (22), présente un diamètre plus grand relativement à l'ouverture de fond (5).
